# EUROPÄISCHE PATENTSCHRIFT

(11) **EP 2 712 575 B1**
(45) Veröffentlichungstag und Bekanntmachung des Hinweises auf die Patenterteilung: **22.06.2016**
(21) Anmeldenummer: 13401106.3
(22) Anmeldetag: 20.09.2013
(51) Int. Cl.: A61C 11/00, A61C 19/05

(54) **Verfahren zum Positionieren von mindestens einem Zahnbogenmodell in einem Artikulator, Computerprogramm sowie Artikulator**
Method for positioning of at least one dental arch model to an articulator, computer program, and articulator
Procédé de positionnement d'au moins un modèle d'arc dentaire dans un articulateur, programme informatique et articulateur

(30) Priorität: 27.09.2012 DE 102012018997
(43) Veröffentlichungstag der Anmeldung: 02.04.2014
(73) Patentinhaber: Sabine und Udo Plaster GbR, 90489 Nürnberg (DE)
(72) Erfinder:
(74) Vertreter: Cöster, Enno

(56) Entgegenhaltungen:
- DE-A1- 3 512 806
- DE-A1- 10 154 994
- US-A- 4 624 639

## Beschreibung

Die Erfindung betrifft ein Verfahren zum Positionieren von mindestens einem Zahnbogenmodell in einem Artikulator, ein Computerprogramm zur Durchführung des Verfahrens sowie einen mechanischen Artikulator.

Artikulatoren - auch Simulatoren genannt - werden in der Zahntechnik verwendet, um zum Beispiel Gipsabdrücke der Zahnbögen von Oberkiefer und Unterkiefer positionieren und zudem zueinander bewegen zu können, um Schließbewegungen oder Mahlbewegungen der beiden Modelle simulieren zu können. Der Artikulator erlaubt somit insbesondere einem Zahntechniker, die Funktion und die Positionierung der Zahnbögen beim Patienten simulieren zu können, um beispielsweise Zahnersatz positionsrichtig und funktionsgerecht fertigen zu können.

Ein traditionelles Problem bei der Verwendung von Artikulatoren besteht darin, die Modelle korrekt in dem Artikulator zu positionieren. Hierzu haben sich über Jahre hinweg unterschiedlichste Verfahren etabliert, wobei oftmals zusätzliche Hilfspunkte bei dem Patienten messtechnisch abgenommen und für die Positionierung genutzt werden. So bilden beispielsweise Bereiche des Ohrs, der Nase oder des Kiefergelenks bei den unterschiedlichen Verfahren Stützpunkte zur Übertragung der Position von Oberkiefer und Unterkiefer mit den Zahnbögen in den Artikulator.

Die Druckschrift DE 10154994 A1, die wohl den nächstkommenden Stand der Technik bildet, betrifft beispielsweise eine dentofaziale Analysevorrichtung, wobei in einem ersten Schritt mittels einer Registrierplatte im Mund des Patienten eine faziale Inzisalkante der maxillaren Schneidezähne des Patienten mit einer Schneidezahnlinie auf der Registrierplatte ausgerichtet werden und über ein Bissregistrierungsmaterial die Abdrücke der maxillaren Zähne des Patienten aufgenommen werden, um eine Okklusionsebene des Patienten zu registrieren. Die Registrierplatte wird in den Artikulator positioniert, wobei die Schneidezahnlinie der Registrierplatte um einen bekannten Abstand von einer Schwenkachse des Artikulators beabstandet ist und somit als Referenz genommen wird.

Es ist Aufgabe der vorliegenden Erfindung, einen reproduzierbaren und damit fehlerunanfälligen Weg zum Positionieren von mindestens einem Zahnbogenmodell in einem Artikulator vorzuschlagen, wobei zugleich das Zahnbogenmodell derart in dem Artikulator angeordnet ist, dass die Position und Funktion besser simuliert werden kann. Der Erfindung liegt auch die Aufgabe zugrunde, ein entsprechendes Computerprogramm bzw. einen virtuellen Artikulator sowie einen Artikulator, insbesondere einen mechanischen Artikulator, vorzuschlagen.

Diese Aufgaben werden durch ein Verfahren mit den Merkmalen des Anspruchs 1, durch ein Computerprogramm mit den Merkmalen des Anspruchs 10 sowie durch einen Artikulator mit den Merkmalen des Anspruchs 11 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Verfahren zum Positionieren von einem oberen Zahnbogenmodell in einem Artikulator vorgeschlagen. Der Artikulator ist geeignet und/oder ausgebildet, um Modelle von Zahnbögen von Oberkiefer und Unterkiefer zu positionieren und zudem zueinander bewegen zu können, um Schließbewegungen oder Mahlbewegungen der beiden Modelle simulieren zu können.

Das Verfahren kann bei einer ersten Alternative mechanisch ausgeführt werden, wobei der Artikulator als ein mechanischer Artikulator ausgebildet ist. Bei einer anderen Alternative kann das Verfahren computergestützt ausgeführt werden, wobei der Artikulator als ein virtueller Artikulator ausgebildet ist und wobei das Verfahren durch Durchführung eines Computerprogramms auf einem Computer umgesetzt wird.

Der Artikulator umfasst eine Schwenkachse, wobei die Schwenkachse ein Schwenken des Zahnbogenmodells um die Schwenkachse ermöglicht. Ferner definiert der Artikulator eine Gaumennahthilfslinie, eine Kauzentrumshilfslinie und eine Auflagehilfsfläche. Insbesondere für die weitere Beschreibung des Verfahrens und des Artikulators können aus diesen Komponenten eine SOLL-Okklusionsebene und eine Frontzahnlinie als weitere Hilfsgrößen abgeleitet werden.

Zur Definition der Gaumennahthilfslinie sowie der Auflagehilfsfläche wird zunächst eine senkrechte Projektion auf die Ebene, welche durch die Auflagehilfsfläche definiert ist, betrachtet. Die senkrechte Projektion auf die Ebene der Auflagehilfsfläche ist gedanklich mit einer Draufsicht auf die Auflagehilfsfläche zu vergleichen.

Die Kauzentrumshilfslinie ist parallel oder weitgehend parallel zu der projizierten Schwenkachse angeordnet. Weitgehend parallel bedeutet, dass diese in einem Winkelbereich von +/- 5° abweichen kann. Die Gaumennahthilfslinie ist senkrecht oder weitgehend senkrecht zu der projizierten Schwenkachse angeordnet, wobei weitgehend bedeutet, dass diese in einem Winkelbereich von +/- 5° abweichen kann.

Die Frontzahnlinie oder die auf die Auflagehilfsfläche projizierte Frontzahnlinie wird abgeleitet, indem eine Parallele zu der Schwenkachse gezogen wird, welche in der Auflagehilfsfläche um eine Länge L zwischen 3 cm und 8 cm, vorzugsweise zwischen 4 cm und 6 cm von der exakt parallelen Kauzentrumhilfslinie und/oder von dem Schnittpunkt von Kauzentrumhilfslinie und Gaumennahthilfslinie beabstandet ist. Die projizierte Frontzahnlinie wird verwendet, wenn das obere Zahnbogenmodell mit einem Höhen-Offset auf der Auflagehilfsfläche positioniert wird. Die Höhe der Frontzahnlinie in Bezug auf die Auflagehilfsfläche entspricht vorzugsweise dem Abstand einer IST-Okklusionsfläche des oberen Zahnbogenmodells von der Auflagehilfsfläche bei den Frontzähnen. Für den Fall, dass das obere Zahnbogenmodell so auf der Auflagehilfsfläche angeordnet wird, dass die Frontzähne auf der Auflagehilfsfläche aufliegen oder diese sogar leicht durchstoßen, wird die Frontzahnlinie auf oder in der Auflagehilfsfläche angeordnet.

Die Frontzahnlinie ist in Bezug auf die Kauzentrumhilfslinie auf der gegenüberliegenden Seite wie die Schwenkachse angeordnet. Durch diese Anordnung wird festgelegt, dass der Molarenbereich des Zahnbogenmodells zur Schwenkachse und der Inzisalbereich des Zahnbogenmodells von der Schwenkachse weggerichtet ist. Frontzahnlinie, Gaumennahthilfslinie und/oder Kauzentrumhilfslinie sind vorzugsweise in der Auflagehilfsfläche angeordnet.

Der Winkelbereich der Kauzentrumshilfslinie erstreckt sich in der Ebene der Auflagefläche um den Schnittpunkt der exakt parallelen Kauzentrumshilfslinie und der exakt senkrechten Gaumennahthilfslinie. Der Winkelbereich der Gaumennahthilfslinie erstreckt sich in der Ebene der Auflagefläche um den Schnittpunkt der exakt senkrechten Gaumennahthilfslinie mit der parallelen Kauzentrumshilfslinie. In einer möglichen, einfachen Ausgestaltung weist der Artikulator nur die exakt parallele Kauzentrumshilfslinie und die exakt senkrechte Gaumennahthilfslinie auf.

In einer Seitenansicht des Artikulators, wobei die Blickrichtung der Seitenansicht parallel zu der Schwenkachse ausgerichtet ist, verläuft die Schwenkachse parallel und höhenversetzt zu der Auflagehilfsfläche.

Die SOLL-Okklusionsebene wird durch die Schwenkachse und die Frontzahnlinie definiert. Diese nimmt zu der Auflagehilfsfläche einen Okklusionswinkel zwischen 1 Grad und 20 Grad, vorzugsweise zwischen 5 Grad und 15 Grad und insbesondere von 10 Grad ein. In Abhängigkeit der Ausführung des Artikulators kann der Okklusionswinkel einstellbar sein, wie im Zusammenhang mit dem Anspruch 15 noch ausgeführt wird.

In dem Verfahren wird das obere Zahnbogenmodell verwendet, wobei das obere Zahnbogenmodell dem Zahnbogen des Oberkiefers entspricht und eine Gaumennahtreferenz aufweist. Das obere Zahnbogenmodell umfasst mindestens einen Zahn, vorzugsweise mehrere Zähne. Die Gaumennahtreferenz kann im einfachsten Fall der Verlauf der Gaumennaht sein, welcher ortsrichtig relativ zu dem mindestens einen Zahn angeordnet ist.

Ferner verwendet das Verfahren einen Übertragungsschlüssel, wobei der Übertragungsschlüssel eine Ebenenreferenz für das obere Zahnbogenmodell zu einer horizontalen Ebene aufweist. Insbesondere trägt der Übertragungsschlüssel die Information, wie die Ist-Okklusionsebene des oberen Zahnbogens des Oberkiefers relativ zu der horizontalen Ebene angeordnet ist.

In einem Schritt des Verfahrens wird das obere Zahnbogenmodell durch Bezugnahme auf die Ebenenreferenz des Übertragungsschlüssels zu der Auflagehilfsfläche ausgerichtet. Insbesondere ist die horizontale Ebene des Übertragungsschlüssels parallel oder sogar in dergleichen Ebene wie die Auflagehilfsfläche. Durch diesen Schritt werden bereits zwei Rotationsfreiheitsgrade des oberen Zahnbogenmodells in dem Artikulator korrekt eingestellt.

In einem weiteren Schritt wird das obere Zahnbogenmodell durch Bezugnahme auf die Gaumennahtreferenz zu der Gaumennahthilfslinie ausgerichtet. Insbesondere werden in der Projektion oder Draufsicht die Gaumennahtreferenz und die Gaumennahthilfslinie deckungsgleich ausgerichtet. Durch diesen weiteren Schritt wird der dritte Rotationsfreiheitsgrad und ein erster Translationsfreiheitsgrad korrekt eingestellt.

In einem weiteren Schritt wird das obere Zahnbogenmodell durch Bezugnahme auf das Kauzentrum entlang der Kauzentrumhilfslinie ausgerichtet. Das Kauzentrum in dem oberen Zahnbogenmodell wird beispielsweise durch den sechsten Zahn, insbesondere den Mittelpunkt des sechsten Zahns, definiert. Bei abgewandelten Ausführungsformen wird die Lage des Kauzentrums zwischen dem vierten und dem fünften Zahn definiert. Durch diesen weiteren Schritt wird ein zweiter Translationsfreiheitsgrad in dem Artikulator korrekt eingestellt.

In einem weiteren Schritt wird das obere Zahnbogenmodell durch Bezugnahme auf einen Okklusionspunkt des oberen Zahnbogenmodells in der Höhe zu der Auflagehilfsfläche ausgerichtet. Im einfachsten Fall ist der Übertragungsschlüssel so beschaffen, dass ein Frontzahn einen Okklusionspunkt in der horizontalen Ebene bildet, so dass das Zahnbogenmodell auf der Auflagehilfsfläche so aufgelegt werden muss, dass der Okklusionspunkt des Frontzahns in oder auf der Auflagehilfsfläche aufliegt. Durch diesen weiteren Schritt wird der dritte Translationsfreiheitsgrad des oberen Zahnbogenmodells in dem Artikulator definiert.

Das beschriebene Verfahren kann in der geschilderten Reihenfolge ausgeführt werden, die Schritte können jedoch auf in anderer Reihenfolge durchgeführt werden. Insbesondere kann vorgesehen sein, dass der Schritt des Ausrichtens des oberen Zahnbogenmodells gemeinsam mit dem Schritt des Ausrichtens der Höhe des oberen Zahnbogenmodells ausgeführt wird, indem das obere Zahnbogenmodell gemeinsam mit dem Übertragungsschlüssel auf die Auflagehilfsfläche virtuell oder tatsächlich aufgelegt wird.

Das erfindungsgemäße Verfahren weist eine Vielzahl von Vorteilen auf:
Die Einzelschritte des Verfahrens sind genau definiert, sodass eine Fehlpositionierung des oberen Zahnbogenmodells in dem Artikulator nahezu ausgeschlossen ist. Das Verfahren ist durch die einfache Vorgehensweise auch von unterschiedlichen Benutzern reproduzierbar durchzuführen, sodass stets die gleiche Positionierung des oberen Zahnbogenmodells in dem Artikulator erreicht wird, selbst wenn unterschiedliche Benutzer das Verfahren durchführen. Dadurch ergibt sich eine Qualitätserhöhung bei der Fertigung von Zahnersatz und bei anderen zahntechnischen Dienstleistungen.

Bei der Grundform des Verfahrens werden keine Stützpunkte aus dem Gesicht des Patienten verwendet, sodass zum "Messfehler" bei der Abnahme der Stützpunkte und "Übertragungsfehler" zwischen Zahnarzt und Zahntechniker ausgeschlossen werden.

Die Positionierung des oberen Zahnbogenmodells erfolgt mit Referenz auf das Kauzentrum. Gerade das Kauzentrum ist der kritischste Bereich bei der Simulation von Kaubewegungen, da aufgrund der breiten Kauflächen im Bereich des Kauzentrums dort sich Störkonturen besonders funktionsbeeinträchtigend auswirken.

Durch die reproduzierbare Positionierung und die Nutzung der SOLL-Okklusionsebene wird die Simulation der Kieferbewegungen gegenüber dem Stand der Technik verbessert, wie nachfolgend noch dargelegt wird.

Bei einer Weiterbildung des Verfahrens wird ein unteres Zahnbogenmodell sowie ein Registrat zur Definition der Relativpositionierung von den beiden Zahnbogenmodellen verwendet. Das Registrat ist in einer Ausbildung als physikalisches Hilfsmittel z.B. eine Platte aus einem verformbaren Material, z.B. aus Wachs, Kunststoff oder einem weichen Metall, das zwischen die Zahnbögen eingebracht wird, um die Lage des Unterkiefers zum Oberkiefer aufzuzeichnen oder festzulegen. In einer anderen Ausbildung kann das Registrat auch als ein Datenmodell ausgebildet sein. Das untere Zahnbogenmodell wird in dem Artikulator gemäß dem Registrat relativ zu dem oberen Zahnbogenmodell positioniert. Beide Zahnbogenmodelle werden in dem Artikulator festgelegt.

Bei einer Schwenkung des oberen oder des unteren Zahnbogenmodells um die Schwenkachse wird im Kauzentrum ein Schließwinkel von größer als 80 Grad, vorzugsweise größer als 85 Grad, erreicht. Dieser technische Effekt ergibt sich dadurch, dass die Schwenkachse in der SOLL-Okklusionsebene angeordnet ist und die SOLL-Okklusionsebene und die IST-Okklusionsebene entweder deckungsgleich oder zumindest sehr stark angenähert sind. Sind die SOLL-Okklusionsebene und die Ist-Okklusionsebene deckungsgleich, ergibt sich sogar ein Schließwinkel von 90 Grad. Diese Ausgestaltung berücksichtigt den Umstand, dass bei einem realen Schließen von Oberkiefer und Unterkiefer keine reine Schwenkbewegung um das Kiefergelenk erfolgt, sondern kurz vor dem Schließen eine Schwenk-Translationsbewegung erfolgt, wobei der resultierende, tatsächliche Schließwinkel nicht 60 Grad beträgt, wie dies aus der Position des Kiefergelenks zu erwarten wäre, sondern im statistischen Mittel 85 Grad oder mehr beträgt. Durch die Anordnung von Schwenkachsen, SOLL-Okklusionsebene und IST-Okklusionsebene wird folglich die Funktion beziehungsweise Simulation der realen Bewegung von Oberkiefer und Unterkiefer im Artikulator verbessert dargestellt.

Bei einer bevorzugten Weiterbildung der Erfindung ist die Auflagehilfsfläche horizontal ausgerichtet. Diese Weiterbildung hat den Vorteil, dass das obere Zahnbogenmodell und gegebenenfalls das untere Zahnbogenmodell realitätsnah in dem Artikulator positioniert sind, sodass visuelle Begutachtung, zum Beispiel der Frontzähne und deren Zusammenspiel aus einem korrekten Blickwinkel vom Benutzer begutachtet werden können.

Bei einer bevorzugten Weiterbildung der Erfindung ist vorgesehen, dass der Abstand zwischen der SOLL-Position des Kauzentrums in der SOLL-Okklusionsebene und der Schwenkachse zwischen 70 Millimeter und 120 Millimeter beträgt. Die SOLL-Position des Kauzentrums wird ermittelt, indem die Kauzentrumshilfslinie senkrecht zu der Auflagehilfsfläche auf die SOLL-Okklusionsebene projiziert wird. Prinzipiell könnte dieser Abstand beliebig eingestellt werden, da sich der Schließwinkel stets in einem Bereich größer als 80 Grad, vorzugsweise größer als 85 Grad, einstellt, da sich das obere Zahnbogenmodell tangential oder nahezu tangential in Bezug auf einen Kreis um die Schwenkachse mit dem unteren Zahnbogenmodell trifft. Allerdings wird in dem Artikulator auch die Querrelativbewegung von oberen und unteren Zahnbogenmodell in Okklusionsstellung getestet, wobei festgestellt wurde, dass der genannte Abstand zwischen 70 Millimeter und 120 Millimeter die Querbewegungen besonders realitätsnah nachbildet. Ist der Abstand deutlich kleiner, so wirken sich die Querbewegungen eher als Winkelbewegungen aus, ist der Abstand größer, so sind die Querbewegungen eher als Parallelverschiebungen zu sehen.

Es ist prinzipiell möglich, dass bei dem Verfahren nur die Gaumennahthilfslinie verwendet wird, welche exakt senkrecht zu der Schwenkachse ausgerichtet ist. Bei einer bevorzugten Weiterbildung der Erfindung wird der Winkelbereich von +/- fünf Grad der Gaumennahthilfslinie in Abhängigkeit einer Mittelsymmetrie des Patienten in Bezug auf die Frontalebene eingestellt. Diese Weiterbildung berücksichtigt, dass manche Patienten von frontal betrachtet asymmetrisch sind, sodass auch deren Gebiss asymmetrisch angeordnet ist. Stellt der Zahnarzt bei der Abnahme der Modelle eine derartige Asymmetrie fest, kann er diese als einen numerischen Parameter übermitteln, sodass beispielsweise eine Gaumennahthilfslinie mit einem abweichenden Wert, wie z.B. von plus zwei Grad verwendet wird.

In gleicher Weise kann auch der Winkelbereich von +/- 5° der Kauzentrumshilfslinie dazu genutzt werden, eine Asymmetrie des Patienten zu berücksichtigen. Auch in diesem Fall kann der Zahnarzt bei der Abnahme einen entsprechenden numerischen Wert definieren und als Parameter übertragen. Das Verfahren ist trotz der ein oder zwei zusätzlichen Parameter stets reproduzierbar.

Optional umfasst das Verfahren das abnehmen des Übertragungsschlüssel von dem Patienten.

Bei einer möglichen Weiterbildung der Erfindung ist die Auflagefläche höhenverstellbar ausgebildet. Durch eine Höhenverstellung kann erreicht werden, dass der SOLL-Okklusionswinkel in dem Artikulator verändert werden kann. Wird die Auflagefläche nach oben verschoben, so verringert sich der SOLL-Okklusionswinkel, wird die Auflagehilfsfläche nach unten verschoben, vergrößert sich der SOLL-Okklusionswinkel. Auch bei diesem Parameter ist es möglich, dass der Zahnarzt einen entsprechenden Wert definiert und als Parameter weitergibt. Alternativ ist es möglich, dass der Benutzer den Winkel aus dem Übertragungsschlüssel ableitet und den Artikulator sogar exakt auf den IST-Okklusionswinkel einstellt.

Bei einer möglichen Ausgestaltung der Erfindung ist der Artikulator als ein mechanischer Artikulator ausgebildet. In dieser Ausgestaltung ist es bevorzugt, dass das obere und/oder das untere Zahnbogenmodell als ein Gipsmodell oder Kunststoffmodell ausgebildet ist. Der Übertragungsschlüssel kann als ein Körper, insbesondere Kunststoffkörper ausgebildet sein, der einen Bissabdruck auf der Oberseite und eine ebene Fläche auf der Unterseite trägt. Der Übertragungsschlüssel kann erstellt werden, indem der Patient den Zahnbogen des Oberkiefers in eine plastisch verformbare Masse drückt (Bissabdruck), die auf einer horizontalen Ebene angeordnet ist. Das Registrat kann in gleicher Weise als ein Körper, insbesondere Kunststoffkörper ausgebildet sein, welcher auf der Oberseite einen Bissabdruck des Zahnbogens des Oberkiefers und auf der Unterseite einen Bissabdruck des Zahnbogens des zugehörigen Unterkiefers trägt. Optional umfasst das erfindungsgemäße Verfahren den Schritt der Registraterstellung und/oder der Übertragungsschlüsselerstellung.

Alternativ hierzu ist der Artikulator als ein virtueller Artikulator ausgebildet, wobei das obere, das untere Zahnbogenmodell, der Übertragungsschlüssel und/oder das Registrat als Datensätze ausgebildet sind, welche beispielsweise durch eine Intraoralkamera unmittelbar vom Patienten abgenommen wurden oder durch einen 3D-Scanner aus realen Modellen etc. erfasst wurden.

Ein weiterer Gegenstand der Erfindung betrifft ein Computerprogramm mit den Merkmalen des Anspruchs 10.

Ein weiterer Gegenstand der Erfindung betrifft einen Artikulator, insbesondere ein mechanischer Artikulator, welcher insbesondere zur Durchführung des Verfahrens, wie es zuvor beschrieben wurde, geeignet und/oder ausgebildet ist.

Der Artikulator umfasst einen Auflageabschnitt, welcher über eine Bodenfläche beispielsweise auf einem Tisch oder dergleichen aufgestellt werden kann, sowie einen Schwenkabschnitt, wobei der Auflageabschnitt und der Schwenkabschnitt über eine Schwenkachse schwenkbar miteinander verbunden sind. Die Schwenkachse verläuft vorzugsweise parallel zu der Bodenfläche. Der Schwenkabschnitt weist eine obere Aufnahme für ein oder das obere Zahnbogenmodell und der Auflageabschnitt bevorzugt eine untere Aufnahme für ein oder das untere Zahnbogenmodell auf.

Der Artikulator umfasst eine Positioniereinrichtung, wobei die Positioniereinrichtung ortsfest zu dem Auflageabschnitt angeordnet und/oder anordbar ist. Optional ist die Positioniereinrichtung entnehmbar ausgebildet, so dass diese entnommen werden kann, sobald der obere Zahnbogenabschnitt an dem Schwenkabschnitt befestigt ist. Beispielsweise ist die Positioniereinrichtung als ein Tisch ausgebildet.

Die Positioniereinrichtung weist eine parallel zu der Bodenfläche des Auflageabschnitts und insbesondere horizontal angeordnete Auflagefläche als Auflagehilfsfläche auf. Relativ zu der Positioniereinrichtung sind eine Gaumennahthilfslinie und eine Kauzentrumshilfslinie definiert, wobei wieder eine SOLL-Okklusionsebene und eine Frontzahnlinie abgeleitet werden können. Die Kauzentrumshilfslinie, die Auflagehilfsfläche, die Gaumennahthilfslinie, die Frontzahnlinie und die SOLL-Okklusionsebene sind in gleicher Weise definiert, wie dies bereits im Zusammenhang mit dem Verfahren beschrieben wurde, sodass auf die vorhergehende Beschreibung verwiesen wird.

Bei einer möglichen konstruktiven Ausgestaltung sind die Gaumennahthilfslinie und/oder die Kauzentrumhilfslinie als Linien in die Auflagefläche der Positioniereinrichtung eingebracht. Derartige Markierungen sind bei der Positionierung einfach zu verwenden.

Bei einer alternativen Ausführungsform der Erfindung kann der Artikulator eine T ransferplatte umfassen, wobei die Gaumennahthilfslinie und die Kauzentrumshilfslinie auf der Transferplatte definiert sind und wobei die Transferplatte reproduzierbar von der Positioniereinrichtung aufgenommen wird. In einem ersten Schritt wird der Übertragungsschlüssel mit dem oberen Zahnbogenmodell in Bezug auf die Gaumennahthilfslinie und/oder die Kauzentrumshilfslinie lagerichtig auf die Transferplatte aufgelegt wird. Nachfolgend wird die Transferplatte in eine vordefinierte Position auf der Positioniereinrichtung abgelegt.

Bei einer alternativen Ausführungsform der Erfindung sind die Gaumennahthilfslinie und/oder die Kauzentrumshilfslinie als Lasermarkierungen projiziert, sodass die Positionierung vereinfacht ist. Es ist auch möglich, dass zur Positionierung eine Kamera verwendet wird, wobei die Kamera derart kalibriert ist, dass die Hilfslinien auf einem Bildschirm der Kamera dargestellt werden.

Bei einer möglichen Weiterbildung der Erfindung sind eine Schar von Gaumennahthilfslinien und/oder Kauzentrumshilfslinien definiert, die jeweils unterschiedlichen Winkeln der Winkelbereiche zugeordnet sind. Wie bereits erläutert können dadurch weitere Parameter reproduzierbar eingestellt werden.

Bei einer möglichen Weiterbildung der Erfindung ist die Auflagefläche höhenverstellbar, um unterschiedliche SOLL-Okklusionswinkel einzustellen. Besonders bevorzugt weist der Artikulator eine höhenverstellbare Positioniereinrichtung auf. Bevorzugt ist die Positioniereinrichtung entnehmbar und reproduzierbar in dem Artikulator anordbar. Beispielsweise weisen der Artikulator und die Positioniereinrichtung Passeinrichtungen, wie z.B. Passstifte, formschlüssige Aufnahmen oder der dergleichen auf, die die reproduzierbare Anordnung gewährleisten.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: eine schematische Darstellung der Übertragung von der Position eines Zahnbogens auf die Position eines Zahnbogenmodells in einem Artikulator;
- Figuren 2 a, b: schematische Darstellungen zur Erläuterung verschiedener Bezugsebenen und -linien in dem Artikulator in der Figur 1;
- Figur 3 a, b: schematische Darstellungen von einem Zahnbogenmodell mit beschriebenen Markierungen;
- Figur 4 a - d: eine schematische Darstellung der Positionierung des Zahnbogenmodells der Figuren 3 a), b) in dem Artikulator in der Figur 1;
- Figur 5: den Artikulator in der Figur 1 vergrößert in einer schematischen Seitenansicht mit eingezeichneten Bezugsflächen, -linien und weiteren Komponenten;
- Figur 6: eine dreidimensionale Darstellung des Kopfgestells der Abnahmevorrichtung in der Figur 1;
- Figur 7: eine Seitenansicht des Kopfgestells in der Figur 6;
- Figur 8: eine Draufsicht auf Kopfgestell in der Figur 6.

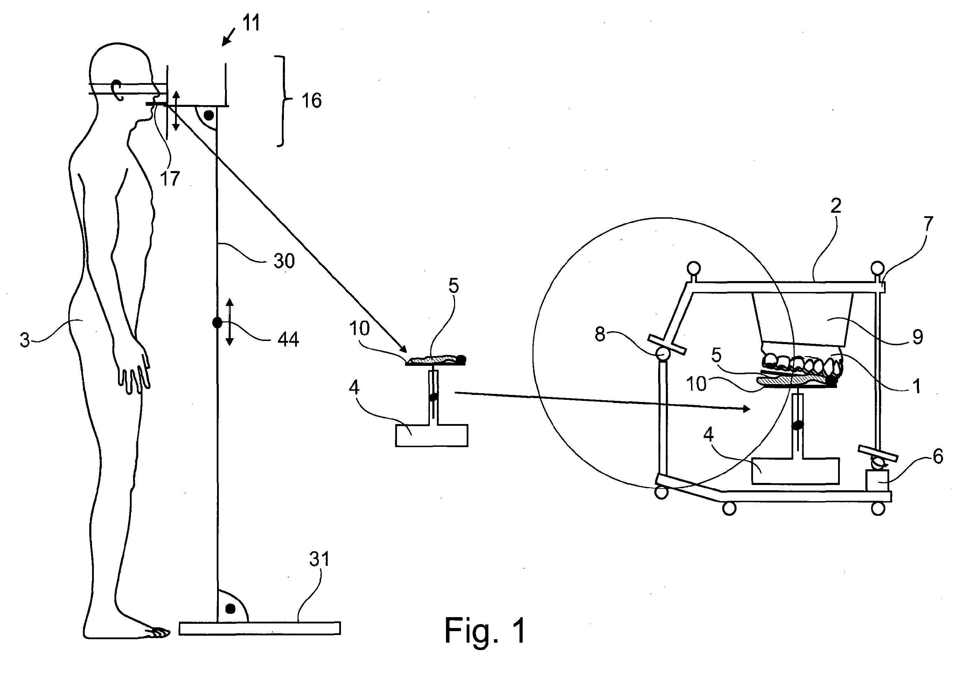

In der Figur 1 ist in einer schematischen Darstellung ein Gesamtvorgang zum Positionieren von einem oberen Zahnbogenmodell 1 in einem Artikulator 2 gezeigt. Das obere Zahnbogenmodell 1 stellt den Zahnbogen des Oberkiefers eines Patienten 3 dar und weist eine Mehrzahl von Zähnen auf. Das obere Zahnbogenmodell 1 ist beispielsweise als ein Gipsmodell oder ein Kunststoffmodell ausgebildet. Auf der linken Seite der Figur 1 ist ein Patient 3 gezeigt, von dessen Gebiss ein Übertragungsschlüssel 5 abgenommen wird, wie nachfolgend noch erläutert wird. In der Mitte der Figur 1 ist eine Positioniereinrichtung 4 dargestellt, wobei der Übertragungsschlüssel 5 ggf. gemeinsam mit dem oberen Zahnbogenmodell 1 auf der Positioniereinrichtung 4 positioniert ist. Auf der rechten Seite ist der Artikulator 2 gezeigt, in dem die Positioniereinrichtung 4 und das obere Zahnbogenmodell 1 lagerichtig positioniert sind.

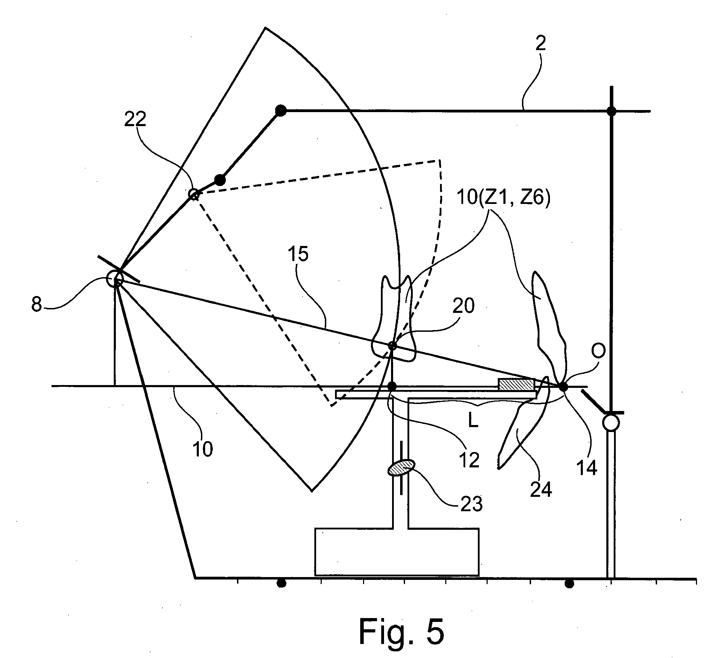

Der Artikulator 2 weist einen Auflageabschnitt 6 und einen Schwenkabschnitt 7 auf, welche über eine Schwenkachse 8 miteinander schwenkbar verbunden sind. Das obere Zahnbogenmodell 1 wird mittels eines Befestigungsmittels 9, wie zum Beispiel Gips oder eine Magnethalterung etc. an dem Schwenkabschnitt 7 befestigt, sodass dieses zusammen mit dem Schwenkabschnitt 7 um die Schwenkachse 8 geschwenkt wird. Zu einem späteren Zeitpunkt wird die Positioniereinrichtung 4 herausgenommen und stattdessen ein unteres Zahnbogenmodell 24 (Figur 5) lagerichtig zu dem oberen Zahnbogenmodell 1 eingesetzt und mit dem Auflageabschnitt 6 verbunden, sodass mit dem Artikulator 2 eine Schließbewegung des oberen Zahnbogenmodells 1 und des unteren Zahnbogenmodells 24 simuliert werden kann.

Mittig ist nochmals die Positioniereinrichtung 4 mit dem Übertragungsschlüssel 5 dargestellt. Auf der linken Seite ist der Patient 3 dargestellt, wobei dem Patient 3 mit einer Abnahmevorrichtung 11 der Übertragungsschlüssel 5 abgeformt wird.

Die Positionierung des oberen Zahnbogenmodells 1 in dem Artikulator 2 stellt eine besondere Herausforderung dar, da die Positionierung möglichst ähnlich zu der Lage des Oberkiefers und Unterkiefers beim Patienten 3 umgesetzt werden soll, um den Benutzer des Artikulators 2, zum Beispiel einem Zahntechniker, eine möglichst realitätsnahe Simulation des Zusammenwirkens vom oberen Zahnbogenmodell 1 und unteren Zahnbogenmodell 24 vermitteln zu können.

Um die korrekte Positionierung des oberen Zahnbogenmodells 1 relativ zu dem Schwenkabschnitt 7 des Artikulators 2 zu erreichen, muss dieses auf der Positioniereinrichtung 4 lagerichtig angeordnet werden.

Die Positioniereinrichtung 4 weist eine Auflagefläche 10 auf, welche über die Positioniereinrichtung 4 reproduzierbar in dem Artikulator 2 angeordnet werden kann. Beispielsweise ist die Positioniereinrichtung 4 über Passstifte oder Anschläge mit dem Auflageabschnitt 6 des Artikulators 2 lösbar verbunden.

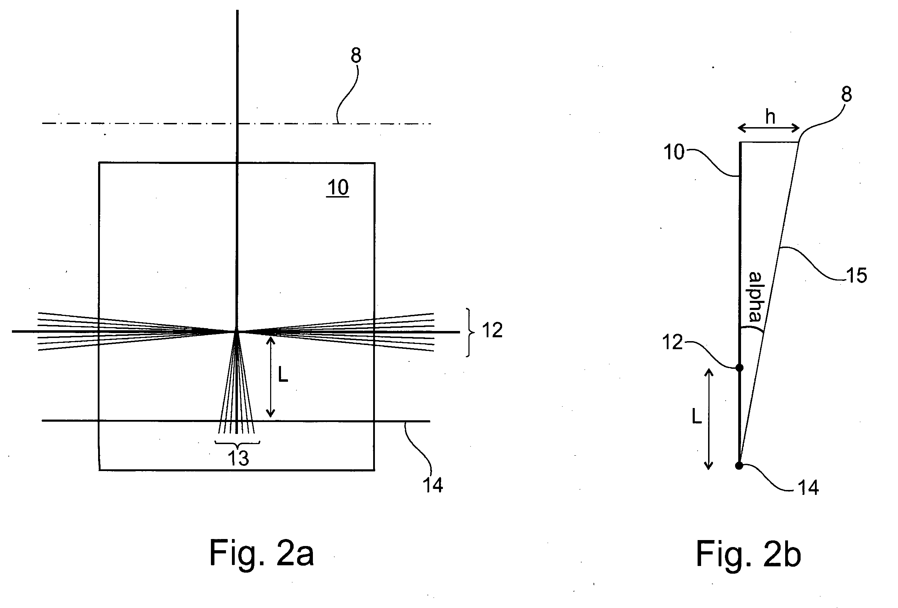

Zur korrekten Positionierung des Übertragungsschlüssels 5 und des oberen Zahnbogenmodells 1 auf der Auflagefläche 10 werden Hilfslinien und Hilfsflächen in Abhängigkeit der Position der Schwenkachse 8 verwendet, wie dies im Zusammenhang mit den Figuren 2a, 2b erläutert wird:
Die Figur 2 a zeigt eine Draufsicht auf die Auflagefläche 10 der Positioniereinrichtung 4, wobei die Schwenkachse 8 senkrecht projiziert auf die Auflagefläche 10, beziehungsweise auf die Ebene der Auflagefläche 10 dargestellt ist. Die Figur 2 b zeigt die Auflagefläche 10 in einer Seitenansicht. Die Auflagefläche 10 definiert für die mathematische Betrachtung eine Auflagehilfsfläche.

Parallel und versetzt zu der Schwenkachse 8 ist eine Kauzentrumshilfslinie 12 sowie senkrecht zu der Schwenkachse 8 eine Gaumennahthilfslinie 13 dargestellt. Genauer betrachtet sind sogar mehrere Kauzentrumshilfslinien 12 dargestellt, welche um den Schnittpunkt der zuerst beschriebenen parallelen Kauzentrumshilfslinie 12 und der zuerst beschriebenen senkrechten Gaumennahthilfslinie 3 um einen Winkel von plus/minus 5 Grad in der Ebene der Auflagefläche 10 angeordnet sind. Ferner ist eine Frontzahnlinie 14 dargestellt, welche parallel zu der projizierten Schwenkachse 8 angeordnet und von der parallel zu der projizierten Schwenkachse 8 angeordneten Kaufzentrumshilfslinie 12 um eine Länge L von 3 cm bis 6 cm, insbesondere von 4,5 cm beabstandet angeordnet ist. Genauer betrachtet sind mehrere Gaumennahthilfslinien 13 dargestellt, welche zueinander in einem Winkelbereich von plus/minus fünf Grad um den Schnittpunkt von der parallel zu der projizierten Schwenkachse 8 angeordneten Kauzentrumhilfslinie 12 und der senkrecht zu der projizierten Schwenkachse 8 abgeordneten Gaumennahthilfslinie 13 angeordnet sind. Bei anderen Ausführungsbeispielen sind nur die parallele Kauzentrumshilfslinie 12 und die die senkrechte Gaumennahthilfslinie 13 eingezeichnet.

Betrachtet man die Komponenten der Figur 2 a in einer Seitenansicht, wie diese in der Figur 2b dargestellt ist, so ist wieder die Frontzahnlinie 14, die mittige Kauzentrumshilfslinie 12 sowie die Schwenkachse 8 zu sehen, wobei die Frontzahnlinie 14 und die Kauzentrumshilfslinie 12 in einer gemeinsamen Ebene mit der Auflagefläche 10 liegen. Die Schwenkachse 8 ist dagegen parallel zu der Ebene der Auflagefläche 10 um eine Höhe h höhenversetzt angeordnet.

Die Schwenkachse 8 und die Frontzahnlinie 14 definieren eine SOLL-Okklusionsebene 15, welche einen SOLL-Okklusionswinkel alpha mit der Ebene der Auflagefläche 10 zwischen 1 und 20 Grad, in diesem Ausführungsbeispiel von 10 Grad einschließt.

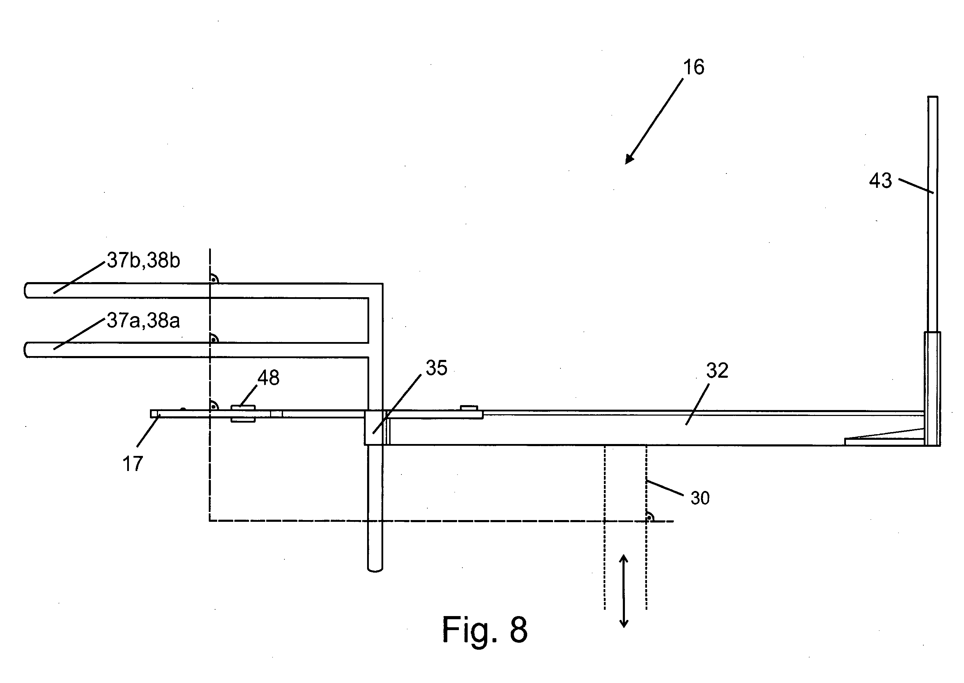

Wie bereits im Zusammenhang mit der Figur 2 a erläutert, wird auf der Positioniereinrichtung 4 der Übertragungsschlüssel 5 sowie das obere Zahnbogenmodell 1 aufgelegt. Die Abformung des Übertragungsschlüssels 5 erfolgt mit der Abnahmevorrichtung 11, welche nachfolgend in Zusammenhang mit den Figuren 1, 7, 8 und 9 beschrieben wird.

Die Figur 1 zeigt die Abnahmevorrichtung 11 in einer Gesamtansicht, wobei die Abnahmevorrichtung 11 in ein Kopfgestell 16, ein Stativ 30 und in einen Fussabschnitt 31 unterteilt werden kann. Die Abnahmevorrichtung 11 ist so ausgebildet, dass eine Bissgabel 17 als ein Intraoralabschnitt stets waagerecht und/oder horizontal ausgerichtet ist. Zur Umsetzung kann vorgesehen sein, dass der Fussabschnitt 31 mit seiner Bodenfläche plan auf einem Boden aufliegt und das Stativ 30 senkrecht auf dem Fussabschnitt 31 angeordnet ist. Das Kopfgestell16 ist wiederum senkrecht zu dem Stativ 30 angeordnet, sodass die Bissgabel 17 waagerecht und/oder horizontal angeordnet ist.

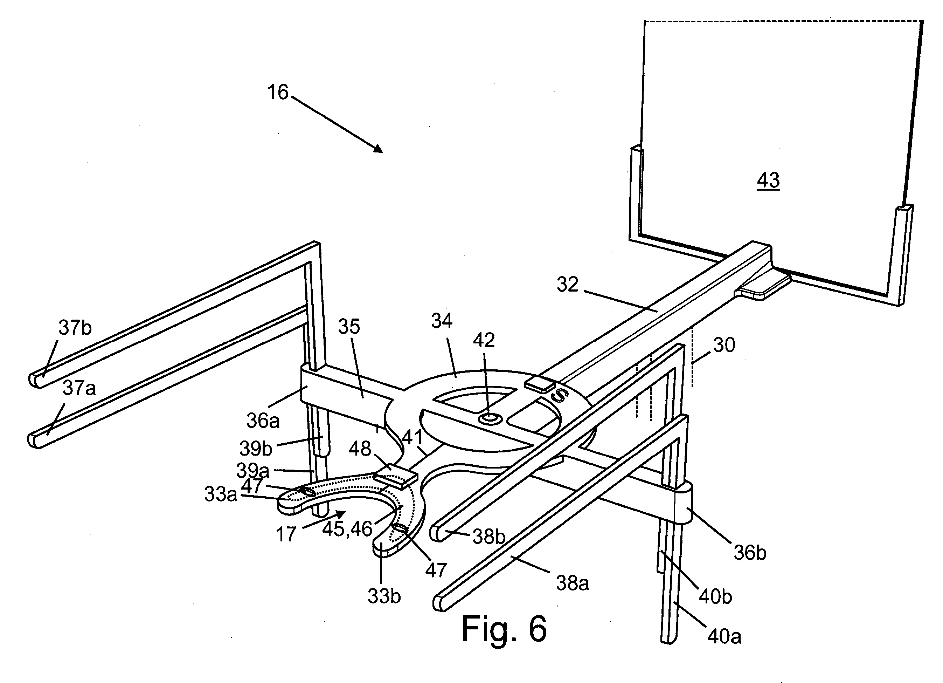

Zur genaueren Beschreibung des Kopfgestells 16 wird auf die Figuren 6, 7 und 8 verwiesen, die das Kopfgestell 16 in einer dreidimensionalen Ansicht, einer Seitenansicht und in einer Draufsicht zeigen. Das Kopfgestell 16 ist als eine Stabkonstruktion ausgebildet und umfasst einen Mittelträger 32, welcher auf dem Stativ 30 rechtwinklig aufliegt und von diesem getragen wird. An der dem Patienten zugewandten Seite des Mittelträgers 32 ist die Bissgabel 17 lösbar befestigt angeordnet. Die Bissgabel 17 ist in der Draufsicht U-förmig ausgebildet, wobei zwei freie Schenkel 33 a, 33 b in Richtung des Patienten 3 und von dem Mittelträger 32 weggerichtet angeordnet sind. Die Bissgabel 17 ist einteilig mit einem Befestigungsabschnitt 34 ausgebildet, wobei der Befestigungsabschnitt 34 an dem Mittelträger 32 festgeclipst ist und auf einem senkrecht zu dem Mittelträger 32 angeordneten Querträger 35 aufliegt beziehungsweise formschlüssig aufgenommen wird. Der Befestigungsabschnitt 34 ist in der Draufsicht kreisrund ausgebildet, wobei dieser im Bereich des Mittelträgers 32 durchbrochen ist.

An den freien Enden des Querträgers 35 sind Linealeinrichtungen 36 a, b angeordnet, wobei jeder der Linealeinrichtungen 36 a, b zwei Lineale 37 a, b, beziehungsweise 38 a, b trägt. Die Lineale 37 a, b, 38, a, b sind jeweils als Winkelteile ausgebildet und weisen einen lotrecht und/oder parallel zu dem Stativ 30 angeordneten Einsteckabschnitt 39 a, b, 40 a, b auf, mit denen die Lineale 37 a, b, 38 a, b in dem Querträger 35 klemmend eingesteckt sind. Die Linealeinrichtungen 36 a, b ermöglichen es, die Lineale 37 a, b, 38 a, b individuell in der Höhe einzustellen, wobei jedoch konstruktiv sichergestellt ist, dass die Lineale 37 a, b, 38 a, b stets horizontal und/oder waagerecht und zudem parallel zu dem Mittelträger 32 oder zu einer Mittellinie 41 der Bissgabel 17 ausgerichtet sind.

In der Mitte des Befestigungsabschnitts 34 auf dem Kreuzungspunkt zwischen Mittelträger 32 und Querträger 35 ist eine Wasserwaagenlibelle 42 angeordnet, mit der ein Benutzer die waagerechte und/oder horizontale Ausrichtung des Kopfgestells 16 und damit der mit dem Kopfgestell 16 verbundenen Bissgabel 17 überprüfen kann. insbesondere ist die Abnahmevorrichtung 11 derart angeordnet, dass die Wasserwaagenlibelle 42 eine waagrechte und/oder horizontale Lage anzeigt.

Auf der der Bissgabel 17 gegenüberliegenden Seite des Kopfabschnitts 16 ist ein Spiegelabschnitt 43 angeordnet, der über dem Mittelträger 32 als Ausleger an das Kopfgestell 16 angebunden ist. Der Spiegelabschnitt 43 ist mit seiner spiegelnden Seite in Richtung der Bissgabel 17 und somit in Richtung des Patienten 3 gerichtet. Die Ebene des Spiegelabschnitts 43 ist senkrecht zu der Mittellinie 41 ausgerichtet. Von der Höhe ist der Spiegelabschnitt 43 so ausgelegt und/oder angeordnet, dass ein Patient 3, der die Bissgabel 17 als Intraoralabschnitt in dem Mund hat, in waagerechter und/oder horizontaler Blickrichtung auf den Spiegelabschnitt 43 sich selbst in die Augen sehen kann, um seine Haltung aufrecht und gerade zu justieren.

Wie sich wieder aus der Figur 1 ergibt, weist die Abnahmevorrichtung 11 eine Höhenverstelleinrichtung 44 auf, die es ermöglicht, dass das Kopfgestell 16 in der Höhe verfahren wird, wobei jedoch sichergestellt ist, dass die Bissgabel 17 stets in der horizontalen und/oder waagerechten Ausrichtung verbleibt.

Betrachtet man die Bissgabel 17 in den Figuren 5, 6, 7, etwas genauer, so weist diese eine Auflage 45 für ein Abformmittel auf, das ebenfalls U-förmig auf die Bißgael 17 aufgetragen wird. Das Abformmittel dient dazu, die Zahnbogenkontur des Zahnbogens des Oberkiefers des Patienten 3 abzuformen. Innerhalb der Auflage 45 sind beispielsweise zwei Erhebungen 47 angeordnet, welche eine Verrutschsicherung für das Abformmittel bilden. Die Auflage 45 bildet zumindest zum Teil einen Referenzflächenbereich 46, wobei der Referenzflächenbereich 46 als ein ebener Flächenbereich ausgebildet ist, der die Oberseite der Bissgabel 17 bildet.

Dieser Referenzflächenbereich 46 ist durch die Positionierung der Bissgabel 17 auf dem Stativ 30 waagerecht und/oder horizontal ausgerichtet.

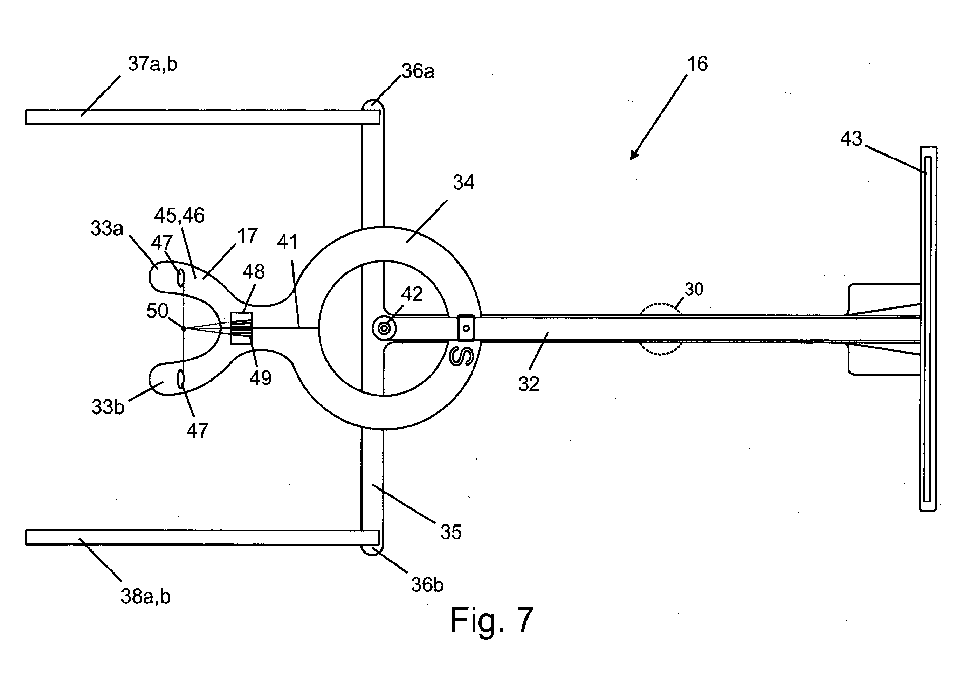

Die Bissgabel 17 weist ein Podest 48 auf, welches im gemeinsamen Bereich der freien Schenkel 33 a, b angeordnet ist und welches eine Auflagefläche für Frontzähne des Patienten 3 bereitstellt. Auf dem Podest 48 und auf der Bissgabel 17 ist die Mittellinie 41 eingezeichnet, welche sich symmetrisch zu den beiden Schenkeln 33 a, b der Bissgabel 17 erstreckt. In einem Winkelbereich von circa plus/minus fünf Grad sind Referenzlinien (Figur 7) angeordnet, welche ausgehend von der Mitte des Podestes 48, also der ungefähren Position der Auflage der Vorderzähne, in Richtung eines Treffpunkts 50 gerichtet sind, wobei der Abstand zwischen der angenommenen Zahnlinie und dem Treffpunkt 50 circa 4,5 Zentimeter beträgt und dem Abstand zwischen den Frontzähnen und dem Kauzentrum eines Menschen ungefähr entspricht.

Bei der Abformung des Übertragungsschlüssels 5 wird nun wie folgt vorgegangen:
Die Abnahmevorrichtung 11 steht senkrecht auf dem Boden und weist das Kopfgestell 16 auf, an dem die Bissgabel 17 angeordnet ist. Der Referenzflächenbereich 46 der Bissgabel 17 ist exakt horizontal ausgerichtet. Auf die Bissgabel 17 wird eine verformbare Masse als Abformmittel aufgebracht und die Bissgabel 17 in den Mund des Patienten 3 etwa mittig zwischen Zahnbogen des Oberkiefers und Zahnbogen des Unterkiefers bei leicht geöffnetem Mund des Patienten 3 eingefahren. Die Bissgabel 17 wird so weit in den Mund des Patienten 3 verschoben, sodass die Vorderzähne des Patienten 3 auf dem Podest 48 abgelegt werden können. In einem nächsten Schritt wird der Patient 3 angewiesen, in dem Spiegelabschnitt 43 sich selbst in die Augen zu schauen. Diese Selbstjustierung des Patienten 3 führt dazu, dass dieser eine gerade, natürliche Körperhaltung einnimmt, sodass auch dessen Oberkiefer und Unterkiefer entsprechend der natürlichen Körperhaltung korrekt positioniert sind. In einem nächsten Schritt wird über die Höhenverstelleinrichtung 44 die Höhe der Bissgabel 17 vergrößert, sodass die Bissgabel 17 und das darauf angeordnete Abformmittel gegen den Zahnbogen des Oberkiefers des Patienten 3 gedrückt wird. Optional kann der Patient 3 angewiesen werden, den Unterkiefer gegen den Oberkiefer zu bewegen. Nachfolgend können die Lineale 37 a, b, 38 a, b an Gesichtslinien des Patienten 3 einjustiert werden, um die Kopfhaltung des Patienten 3 begutachten zu können. Durch die Höhenverstellung des Stativs 30 über die Höhenverstelleinrichtung 44 wird die Zahnbogenkontur des Oberkiefers von dem Patienten 3 abgeformt und auf diese Weise der Übertragungsschlüssel 5 gebildet.

Der Übertragungsschlüssel 5 trägt auf der Oberseite einen Negativabdruck zu den Zähnen des Zahnbogens des Oberkiefers und auf der Unterseite als Abdruck des Referenzflächenbereichs 46 eine Auflagefläche A, die eine Referenzfläche für eine horizontale oder waagerechte Bezugsebene bildet. Sofern die Vorderzähne des Patienten bei gerader Blickrichtung auf den Spiegelabschnitt 43 nicht mittig zu der Mittellinie 41 angeordnet, sondern seitlich versetzt dazu positioniert sind, kann durch die Referenzlinien 49 ein Versatz in der Frontebene abgenommen und dokumentiert werden.

Des Weiteren wird in bekannter Weise das obere Zahnbogenmodell 1 abgeformt.

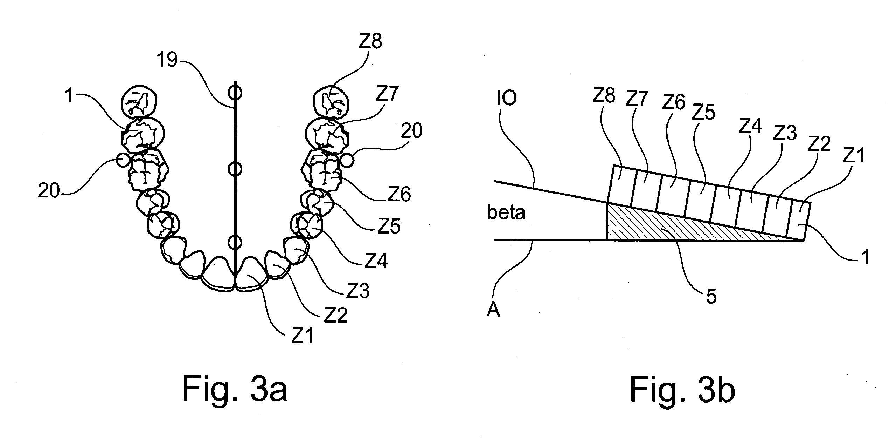

In den Figuren 3a, b sind das obere Zahnbogenmodell 1 sowie der Übertragungsschlüssel 5 dargestellt. In der Figur 3 a ist das obere Zahnbogenmodell 1 in einer Draufsicht gezeigt, wobei neben den Zähnen Z1 - Z8 ergänzend eine Gaumennahtlinie 19 als Gaumennahtreferenz abgebildet ist. Die Gaumennahtlinie 19 ist üblicherweise ein Abdruck auf dem oberen Zahnbogenmodell 1. Zur späteren Verdeutlichung wurden auf der Gaumennahtlinie 19 drei Kreise hinzugefügt. Ferner sind an dem oberen Zahnbogenmodell 1 zwei Markierungen des Kauzentrums 20 angebracht, welche sich mittig zu dem sechsten Zahn Z6 oder zwischen dem sechsten und siebten Zahn Z6-Z7 befinden. Eine derartige Markierung des Kauzentrums 20 kann nach dem Abformen in einfacher Weise auf das obere Zahnbogenmodell 1 aufgebracht werden. In der Figur 3b ist das obere Zahnbogenmodell 1 mit den Zähnen Z1 - Z8 und der Übertragungsschlüssel 5 in einer seitlichen Ansicht jeweils stark schematisiert zu erkennen, wobei auf der Unterseite des Übertragungsschlüssels 5 nochmals die plane Auflagefläche A als Referenz für die horizontale Ebene bei der Abnahme des Übertragungsschlüssels 5 vom Patienten 3 zu erkennen ist. Das obere Zahnbogenmodell 1 ist passgenau in dessen Negativabdruck in dem Übertragungsschlüssel 5 eingesetzt. Wie der Figur 3b zu entnehmen ist nimmt ein IST-Okklusionswinkel beta der IST-Okklusionsebene IO des oberen Zahnbogenmodells 1 einen Wert von ca. 10° gegenüber der planen Auflagefläche A ein.

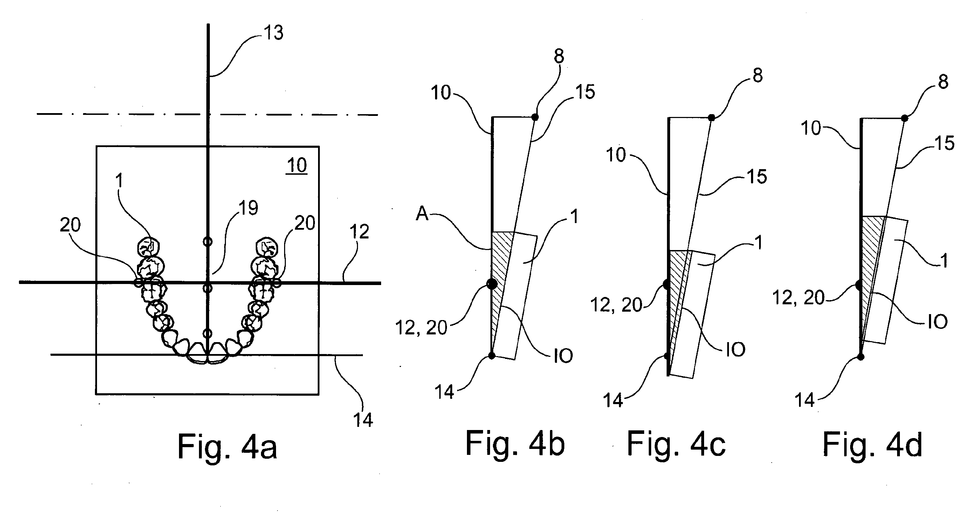

Die Figuren 4 a und 4 b zeigen die Positionierung von dem Übertragungsschlüssel 5 und dem oberen Zahnbogenmodell 1 auf der Positioniereinrichtung 4. Dabei werden das obere Zahnbogenmodell 1 und der Übertragungsschlüssel 5 gemeinsam so aufgesetzt, dass die plane Auflagefläche A auf der Auflagefläche 10 plan aufliegt. Die tatsächliche Höhe des oberen Zahnbogenmodells 1 in Bezug auf die Auflagefläche 10 wird durch die Dicke des Übertragungsschlüssels 5 mitbestimmt. So ist es zum einen möglich, dass der Übertragungsschlüssel 5 so abgenommen wird, dass die Unterseite von einem der Frontzähne Z1 durchstoßen wird, so dass diese einen Okklusionspunkt O bilden, der unmittelbar auf der Auflagefläche 10 aufliegt und dadurch die Höhe des oberen Zahnbogenmodells 1 definiert. Es ist jedoch auch möglich, dass der Übertragungsschlüssel 5 einen Höhenversatz aufweist, so dass das obere Zahnbogenmodell 1 in der Höhe parallel versetzt relativ zu der Auflagefläche 10 aufgesetzt wird. In diesem Fall muss auch die Frontzahnlinie 14 um den gleichen Betrag in der Höhe versetzt angeordnet werden, wobei in diesem Fall auf der Auflagefläche 10 eine senkrecht projizierte Frontzahnlinie 14 zur Bemessung der Länge L verwendet wird.

In einem nächsten Schritt wird die Gaumennahtlinie 19 deckungsgleich mit der Gaumennahthilfslinie 13 gesetzt. Ferner werden die Markierungen der Kauzentren 20 deckungsgleich mit der Kauzentrumshilfslinie 12 gesetzt.

Wie sich aus den Figuren 4b bis d ergibt, wird bei diesem Vorgang der Übertragungsschlüssel 5 mit seiner planen Auflagefläche A auf die Auflagefläche 10 aufgesetzt. Dabei ist es unerheblich, ob die Frontzähne Z1 tatsächlich exakt auf der Frontzahnlinie 14 liegen (Figur 4 b), oder über diese überstehen (Figur 4 c) oder von dieser zurückversetzt sind (Figur 4 d), solange die Kauzentrum 20 stets auf der Kauzentrumshilfslinie 12 liegen. Eine derartige Verschiebung der Frontzähne Z1 gegenüber der Frontzahnlinie 14 kann sich z.B. durch unterschiedliche Abstände L zwischen den Kauzentren 20 und den Frontzähnen ergeben. Wie sich jedoch aus den Figuren 4b bis 4d ergibt, liegt die Ist-Okklusionsebene IO des oberen Zahnbogenmodells 1 in der Figur 4b deckungsgleich mit der SOLL-Okklusionsebene 15 und bei den Figuren 4c und 4d parallel verschoben dazu. Der aus der Positionierung resultierende Schließwinkel ändert sich für den Bereich der Kauzentren 20 nicht oder nur unwesentlich.

In einem nächsten Verfahrensschritt wird das derart vorpositionierte obere Zahnbogenmodell 1 mit dem Schwenkabschnitt 7 verbunden. Nachfolgend wird - wie konventionell bekannt - über ein Registrat die Relativlage zwischen dem oberen Zahnbogenmodell 1 und dem unteren Zahnbogenmodell 24 eingestellt und das untere Zahnbogenmodell 24 mit dem Auflageabschnitt 6 verbunden.

Die Figur 5 zeigt in der Seitenansicht nochmals schematisiert die Positionierung des oberen Zahnbogenmodells 1 in dem Artikulator 2. Von dem oberen Zahnbogenmodell 1 sind allerdings nur die Zähne Z1 und Z6 skizziert. Der Abstand zwischen der Schwenkachse 8 und dem Kauzentrum 20 ist in dem Bereich 70 mm bis 120 mm. Der Abstand L zwischen der Kauzentrumshilfslinie 12 und Frontzahnlinie 14 beträgt zwischen 30 mm und 60 mm in der Ebene der Auflagefläche 10. Der Frontzahn Z1 bildet einen Okklusionspunkt O mit dem dieser auf der Auflagefläche 10 aufliegt oder diese sogar leicht durchstößt. Durch die Schwenkachse 8 und die Frontzahnhilfsline 14 wird die SOLL-Okklusionsebene15 gebildet, die bei der beschriebenen Positionierung der IST-Okklusionsebene IO, die durch die Kauzentren 20 und den Okklusionspunkt O gebildet wird entspricht oder zumindest parallel dazu ist.

Bei einer Schließbewegung des Artikulators 2 ergibt sich folglich ein Schließwinkel 90°, der dem realen Schließwinkel des Kiefergelenks sehr nahe kommt. Dagegen ist zu Illustrationszwecken eine konventionelle Schwenkachse 22 eingezeichnet, um zu zeigen, dass sich bei der konventionellen Positionierung ein Schließwinkel von ca. 60° ergäbe.

Die Positioniereinrichtung 4 weist eine Höhenverstellung 23 auf, die es erlaubt, die Auflagefläche 10 in der Höhe zu versetzen. Durch einen derartigen Höhenversatz kann der Artikulator 2 auf einen anderen SOLL-Okklusionswinkel alpha als weiteren Parameter eingestellt werden.

### Bezugszeichenliste:

- 1: Zahnbogenmodell
- 2: Artikulator
- 3: Patient
- 4: Positioniereinrichtung
- 5: Registrat
- 6: Auflageabschnitt
- 7: Schwenkabschnitt
- 8: Schwenkachse
- 9: Befestigungsmittel
- 10: Auflagefläche
- 11: Abnahmevorrichtung
- 12: Kauzentrumhilfslinie
- 13: Gaumennahthilfslinie
- 14: Frontzahnlinie
- 15: SOLL-Okklusionsebene
- 16: Kopfgestell
- 17: Bissgabel
- 18: Zahnbogenmodell
- 19: Gaumennahtlinie
- 20: Kauzentrum
- 21: plane Auflagefläche
- 22: konventionelle Schwenkachse
- 23: Höhenverstellung
- 24: unteres Zahnbogenmodell
- 30: Stativ
- 31: Fussabschnitt
- 32: Mittelträger
- 33 a, b: freie Schenkel
- 34: Befestigungsabschnitt
- 35: Querträger
- 36 a, b: Linealeinrichtungen
- 37 a, b: Lineale
- 38 a, b: Lineale
- 39 a, b: Einsteckabschnitt
- 40 a,: b Einsteckabschnitt
- 41: Mittellinie
- 42: Wasserwaagenlibelle
- 43: Spiegelabschnitt
- 44: Höhenverstelleinrichtung
- 45: Auflage
- 46: Referenzflächenbereich
- 47: Erhebungen
- 48: Podest
- 49: Referenzlinien
- 50: Treffpunkt

## Patentansprüche

1. Verfahren zum Positionieren von einem oberen Zahnbogenmodell (1) in einem Artikulator (2),
wobei der Artikulator (2) eine Schwenkachse (8) für ein Schwenken des oberen Zahnbogenmodells (1) bereitstellt und wobei eine Gaumennahthilfslinie (13), eine Kauzentrumshilfslinie (12) und eine Auflagehilfsfläche (10) definiert sind sowie eine SOLL-Okklusionsebene (15) und eine Frontzahnlinie (14) abgeleitet werden können,
wobei in einer Projektion auf die Ebene der Auflagehilfsfläche (10) die Kauzentrumshilfslinie (12) in einem Winkelbereich von +-5° zu einer Parallelen zu der projizierten Schwenkachse (8) und die Gaumennahthilfslinie (13) in einem Winkelbereich von +-5° zu einer Senkrechten zu der projizierten Schwenkachse (8) verläuft und wobei in einer Seitenansicht die Schwenkachse (8) parallel und höhenversetzt zu der Auflagehilfsfläche (10) angeordnet ist,
wobei die auf die Ebene der Auflagehilfsfläche (10) projizierte oder darin liegende Frontzahnlinie (14) parallel zu der Schwenkachse (8) um eine Länge L von der Kauzentrumshilfslinie (12) entfernt angeordnet ist und die SOLL-Okklusionsebene (15) durch die Schwenkachse (8) und die Frontzahnlinie (14) definiert ist und zu der Auflagehilfsfläche (10) einen SOLL-Okklusionswinkel (alpha) zwischen 1° und 20° einnimmt,
wobei das obere Zahnbogenmodell (1) eine Gaumennahtreferenz (19) aufweist, mit einem Übertragungsschlüssel (5), wobei der Übertragungsschlüssel (5) eine Ebenenreferenz (A) für das obere Zahnbogenmodell (1) zu einer horizontalen Ebene aufweist,
wobei das obere Zahnbogenmodell (1) durch Bezugnahme auf die Ebenenreferenz (A) des Übertragungsschlüssels (5) zu der Auflagehilfsfläche (10) ausgerichtet wird;
wobei das obere Zahnbogenmodell (1) durch Bezugnahme auf mindestens einen Okklusionspunkt (O) des oberen Zahnbogenmodells (1) in der Höhe zu der Auflagehilfsfläche (10) ausgerichtet wird;
wobei das obere Zahnbogenmodell (1) durch Bezugnahme auf die Gaumennahtreferenz (19) zu der Gaumennahthilfslinie (13) ausgerichtet wird; und wobei das obere Zahnbogenmodell (1) durch Bezugnahme auf das Kauzentrum (20) entlang der Kauzentrumshilfslinie (12) ausgerichtet wird.

2. Verfahren nach Anspruch 1, **gekennzeichnet durch** ein unteres Zahnbogenmodell (24) und **durch** ein Registrat zur Definition der Relativpositionierung von den beiden Zahnbogenmodellen (1,24), wobei das untere Zahnbogenmodell (24) in dem Artikulator (2) gemäß dem Registrat positioniert wird, wobei das obere und das untere Zahnbogenmodell (1,24) im Kauzentrum (20) einen Schließwinkel von größer als 80°, vorzugsweise größer als 85° einnehmen.

3. Verfahren nach Anspruch 1 oder 2, **dadurch gekennzeichnet, dass** die Auflagehilfsfläche (10) horizontal ausgerichtet ist.

4. Verfahren nach einem der vorhergehenden Ansprüche, **dadurch gekennzeichnet, dass** der Abstand zwischen der SOLL-Position des Kauzentrums (20) in der SOLL-Okklusionsebene (15) und der Schwenkachse (8) zwischen 70 mm und 120 mm beträgt.

5. Verfahren nach einem der vorhergehenden Ansprüche, **dadurch gekennzeichnet, dass** Winkelbereich von +/- 5° der Gaumennahthilfslinie (13) in Abhängigkeit eines Parameters, der eine Mittelsymmetrie des Patienten (3) beschreibt, eingestellt wird.

6. Verfahren nach einem der vorhergehenden Ansprüche, **dadurch gekennzeichnet, dass** Winkelbereich von +/- 5° der Kauzentrumshilfslinie (12) in Abhängigkeit eines Parameters, der eine Kauzentrumsasymmetrie des Patienten (3) beschreibt, eingestellt wird.

7. Verfahren nach einem der vorhergehenden Ansprüche, **dadurch gekennzeichnet, dass** durch eine Höhenverstellung der Auflagehilfsfläche (10) der SOLL-Okklusionswinkel (alpha) geändert oder eingestellt wird.

8. Verfahren nach einem der vorhergehenden Ansprüche, **dadurch gekennzeichnet, dass** der Artikulator (2) als ein mechanischer Artikulator ausgebildet ist.

9. Verfahren nach einem der vorhergehenden Ansprüche 1 bis 7, **dadurch gekennzeichnet, dass** der Artikulator (2) als ein virtueller Artikulator ausgebildet ist:

10. Computerprogramm mit Programm-Code Mitteln, um alle Schritte des Verfahrens nach dem Anspruch 9 durchzuführen, wenn das Programm auf einem Computer ausgeführt wird.

11. Artikulator, insbesondere zur Durchführung des Verfahrens nach einem der Ansprüche 1 bis 8,
mit einem Auflageabschnitt (6) und mit einem Schwenkabschnitt (7), wobei der Auflageabschnitt (6) und der Schwenkabschnitt (7) über eine Schwenkachse (8) schwenkbar miteinander verbunden sind, wobei der Schwenkabschnitt (7) eine obere Aufnahme für ein oberes Zahnbogenmodell (1) und der Auflageabschnitt eine (6) untere Aufnahme für ein unteres Zahnbogenmodell (24) aufweist,
mit einer Positioniereinrichtung (4), wobei die Positioniereinrichtung (4) ortsfest zu dem Auflageabschnitt (6) angeordnet und/oder anordbar ist, wobei die Positioniereinrichtung (4) eine horizontale Auflagefläche (10) als Auflagehilfsfläche (10) aufweist, wobei relativ zu der Positioniereinrichtung (4) eine Gaumennahthilfslinie (13) und eine Kauzentrumshilfslinie (12) definiert sind sowie eine SOLL-Okklusionsebene (15) und eine Frontzahnline (14) abgeleitet werden können,
wobei in einer Projektion auf die Ebene der Auflagehilfsfläche (10) die Kauzentrumshilfslinie (12) in einem Winkelbereich von +-5° parallel zu der projizierten Schwenkachse (8) und die Gaumennahthilfslinie (13) in einem Winkelbereich von +-5° senkrecht zu der projizierten Schwenkachse (8) verläuft und wobei in einer Seitenansicht die Schwenkachse (8) parallel und höhenversetzt zu der Auflagehilfsfläche (10) angeordnet ist,
wobei die Frontzahnlinie (14) oder die projizierte Frontzahnlinie (14) parallel zu der Schwenkachse (8) um eine Länge L von der Kauzentrumshilfslinie (12) entfernt angeordnet ist und die SOLL-Okklusionsebene (15) durch die Schwenkachse (8) und die Frontzahnlinie (14) definiert ist und zu der Auflagehilfsfläche (10) einen SOLL-Okklusionswinkel zwischen 1° und 20° einnimmt.

12. Artikulator (2) nach Anspruch 11, **dadurch gekennzeichnet, dass** die Kauzentrumshilfslinie (12) und/oder die Gaumennahthilfslinie (13) als Linien in die Auflagefläche (10) eingebracht sind.

13. Artikulator (2) nach Anspruch 11, **dadurch gekennzeichnet, dass** die Kauzentrumshilfslinie (12) und/oder die Gaumennahthilfslinie (13) als Lasermarkierungen projiziert oder als Kameraüberwachung dargestellt sind.

14. Artikulator (2) nach einem der Ansprüche 11 bis 13, **dadurch gekennzeichnet, dass** eine Schar von Kauzentrumshilfslinien (12) und/oder Gaumennahthilfslinien (13) definiert sind, die jeweils unterschiedlichen Winkel der Winkelbereiche zugeordnet sind.

15. Artikulator (2) nach einem der Ansprüche 11 bis 14, **dadurch gekennzeichnet, dass** die Auflagefläche (10) höhenverstellbar ist, um unterschiedliche SOLL-Okklusionswinkel einzustellen.

## Claims

1. A method for the positioning of an upper dental arch model (1) inside an articulator (2),
wherein the articulator (2) provides a swivel axis (8) for a swiveling of the upper dental arch model (1) and wherein a palatal suture auxiliary line (13), a mastication centre auxiliary line (12) and an auxiliary contact area (10) are defined and a NOMINAL occlusal plane (15) and an anterior tooth line (14) can be derived,
wherein, in a projection onto the plane of the auxiliary contact area (10), the mastication centre auxiliary line (12) runs within an angle range of +-5° to a parallel of the projected swivel axis (8) and the palatal suture auxiliary line (13) runs within an angle range of +-5" to a perpendicular line to the projected swivel axis (8) and wherein, in a side view, the swivel axis (8) is arranged parallel and with an offset in height to the auxiliary contact area (10),
wherein the anterior tooth line (14) projected onto or running within the plane of the auxiliary contact area (10) is arranged parallel to the swivel axis (8) in a distance L to the mastication centre auxiliary line (12) and the NOMINAL occlusal plane (15) is defined by the swivel axis (8) and the anterior tooth line (14) and takes on a NOMINAL occlusal angle (alpha) between 1° and 20° to the auxiliary contact area (10),
wherein the upper dental arch model (1) has a palatal suture reference (19) with a transfer key (5), wherein the transfer key (5) has a plane reference (A) for the upper dental arch model (1) to a horizontal plane, wherein the upper dental arch model (1) is aligned to the auxiliary contact area (10) in reference to the plane reference (A) of the transfer key (5);
wherein the upper dental arch model (1) is aligned in height to the auxiliary contact area (10) in reference to at least one point of occlusion (O) of the upper dental arch model (1);
wherein the upper dental arch model (1) is aligned to the palatal suture auxiliary line (13) in reference to the palatal suture reference (19); and wherein the upper dental arch model (1) is aligned along the mastication centre auxiliary line (12) in reference to the mastication centre (20).

2. The method according to claim 1, **characterised by** a lower dental arch model (24) and by a registration for the definition of the relative positioning of the two dental arch models (1, 24), wherein the lower dental arch model (24) is positioned in the articulator (2) according to the registration, wherein the upper and the lower dental arch model (1, 24) take on a closing angle larger than 80°, preferably larger than 85°, in the mastication centre (20).

3. The method according to claim 1 or 2, **characterized in that** the auxiliary contact area (10) is aligned horizontally.

4. The method according to one of the preceding claims, **characterized in that** the distance between the NOMINAL position of the mastication centre (20) in the NOMINAL occlusal plane (15) and the swivel axis (8) is between 70 mm and 120 mm.

5. The method according to one of the preceding claims, **characterized in that** the angle range of +-5° of the palatal suture auxiliary line (13) is adjusted subject to a parameter describing a middle symmetry of the patient (3).

6. The method according to one of the preceding claims, **characterized in that** the angle range of +-5° of the mastication centre auxiliary line (12) is adjusted subject to a parameter describing a mastication centre asymmetry of the patient (3).

7. The method according to one of the preceding claims, **characterized in that** the NOMINAL occlusal angle (alpha) is changed or is adjusted by a height adjustment of the auxiliary contact area (10).

8. The method according to one of the preceding claims, **characterized in that** the articulator (2) is formed as a mechanical articulator.

9. The method according to one the preceding claims 1 to 7, **characterized in that** the articulator (2) is formed as a virtual articulator.

10. A computer programme with programme code means to perform all steps of the method of claim 9 when the programme is executed on a computer.

11. An articulator, in particular for the execution of the method according to one of the claims 1 to 8,
with a contact section (6) and with a swivel section (7), wherein the contact section (6) and the swivel section (7) are pivotally interconnected via a swivel axis (8), wherein the swivel section (7) has an upper mounting for an upper dental arch model (1) and the contact section (6) has a lower mounting for a lower dental arch model (24),
with a positioning device (4), wherein the positioning device (4) is arranged stationarily and/or is arrangeable stationarily to the contact section (6), wherein the positioning device (4) has a horizontal contact area (10) as auxiliary contact area (10), wherein a palatal suture auxiliary line (13) and a mastication centre auxiliary line (12) are defined relatively to the positioning device (4), and a NOMINAL occlusal plane (15) as well as an anterior tooth line (14) can be derived,
wherein in a projection onto the plane of the auxiliary contact area (10) the mastication centre auxiliary line (12) runs within an angle range of +-5° parallel to the projected swivel axis (8) and the palatal suture auxiliary line (13) runs within an angle range of +-5° perpendicularly to the projected swivel axis (8) and wherein in a side view the swivel axis (8) is arranged parallel and with an offset in height to the auxiliary contact area (10),
wherein the anterior tooth line (14) or the projected anterior tooth line (14) is arranged parallel to the swivel axis (8) in a distance L to the mastication centre auxiliary line (12) and the NOMINAL occlusal plane (15) is defined by the swivel axis (8) and the anterior tooth line (14) and takes on a NOMINAL occlusal angle between 1° and 20° to the auxiliary contact area (10).

12. The articulator (2) according to claim 11, **characterized in that** the mastication centre auxiliary line (12) and/or the palatal suture auxiliary line (13) are inserted as lines into the contact area (10).

13. The articulator (2) according to claim 11, **characterized in that** the mastication centre auxiliary line (12) and/or the palatal suture auxiliary line (13) are projected as laser markings or are depicted as camera monitoring.

14. The articulator (2) according to one of the claims 11 to 13, **characterized in that** an array of mastication centre auxiliary lines (12) and/or palatal suture auxiliary lines (13) are defined, which are assigned to the respectively different angles of the angle ranges.

15. The articulator (2) according to one of the claims 11 to 14, **characterized in that** the contact area (10) is adjustable in height in order to set different NOMINAL occlusal angles.

## Revendications

1. Procédé de positionnement d'un modèle d'arcade dentaire (1) supérieur dans un articulateur (2),
dans lequel l'articulateur (2) fournit un axe de basculement (8) pour un basculement du modèle d'arcade dentaire (1) supérieur,
et dans lequel sont définies une ligne auxiliaire (13) de suture palatine, une ligne auxiliaire (12) de centre masticatoire et une surface auxiliaire de support (10),
un plan d'occlusion de consigne (15) et une ligne (14) de dent antérieure pouvant être déduits,
et dans une projection sur le plan de la surface auxiliaire de support (10), la ligne auxiliaire (12) de centre masticatoire s'étend dans une plage angulaire de +-5° par rapport à une parallèle à l'axe de basculement projeté (8), et la ligne auxiliaire (13) de suture palatine s'étend dans une plage angulaire de +-5° par rapport à la perpendiculaire à l'axe de basculement projeté (8), et en vue de côté l'axe de basculement (8) est parallèle et décalé en hauteur par rapport à la surface auxiliaire de support (10),
la ligne (14) de dent antérieure projetée sur le plan de la surface auxiliaire de support (10) ou située dans celui-ci est agencée parallèlement à l'axe de basculement (8) en étant écartée d'une longueur L par rapport à la ligne auxiliaire (12) de centre masticatoire, et le plan d'occlusion de consigne (15) est défini par l'axe de basculement (8) et par la ligne de dent antérieure (14) et occupe un angle d'occlusion de consigne (alpha) compris entre 1° et 20° par rapport à la surface auxiliaire de support (10),
dans lequel le modèle d'arcade dentaire (1) supérieur présente une référence (19) de suture palatine pourvue d'une clé de transfert (5), la clé de transfert (5) présentant une référence de plan (A) pour le modèle d'arcade dentaire (1) supérieur par rapport à un plan horizontal,
dans lequel le modèle d'arcade dentaire (1) supérieur est aligné en se référant à la référence de plan (A) de la clé de transfert (5) par rapport à la surface auxiliaire de support (10) ;
dans lequel le modèle d'arcade dentaire (1) supérieur est aligné en hauteur par rapport à la surface auxiliaire de support (10) en se référant à au moins un point d'occlusion (O) du modèle d'arcade dentaire (1) supérieur ;
dans lequel le modèle d'arcade dentaire (1) supérieur est aligné par rapport à la ligne auxiliaire (13) de suture palatine en se référant à la référence de suture palatine (19) ; et
dans lequel le modèle d'arcade dentaire (1) supérieur est aligné le long de la ligne auxiliaire (12) de centre masticatoire en se référant au centre masticatoire (20).

2. Procédé selon la revendication 1, **caractérisé par** un modèle d'arcade dentaire (24) inférieur et par un enregistrement pour définir le positionnement relatif des deux modèles d'arcade dentaire (1, 24), le modèle d'arcade dentaire (24) inférieur étant positionné par rapport à l'enregistrement dans l'articulateur (2), dans lequel les modèles d'arcade dentaire (1, 24) supérieur et inférieur occupent, dans le centre masticatoire (20), un angle de fermeture supérieur à 80°, de préférence supérieur à 85°.

3. Procédé selon la revendication 1 ou 2, **caractérisé en ce que** la surface auxiliaire de support (10) est alignée horizontalement.

4. Procédé selon l'une des revendications précédentes, **caractérisé en ce que** la distance entre la position de consigne du centre masticatoire (20) dans le plan d'occlusion de consigne (15) et l'axe de basculement (8) est comprise entre 70 mm et 120 mm.

5. Procédé selon l'une des revendications précédentes, **caractérisé en ce qu'**une plage angulaire de +/-5° de la ligne auxiliaire (13) de suture palatine est réglée en fonction d'un paramètre qui décrit une symétrie médiane du patient (3).

6. Procédé selon l'une des revendications précédentes, **caractérisé en ce qu'**une plage angulaire de +/-5° de la ligne auxiliaire (12) de centre masticatoire est réglée en fonction d'un paramètre qui décrit une asymétrie du centre masticatoire du patient (3).

7. Procédé selon l'une des revendications précédentes, **caractérisé en ce que** l'angle d'occlusion de consigne (alpha) est modifié ou réglé par un réglage en hauteur de la surface auxiliaire de support (10).

8. Procédé selon l'une des revendications précédentes, **caractérisé en ce que** l'articulateur (2) est réalisé sous la forme d'un articujateur mécanique.

9. Procédé selon l'une des revendications 1 à 7, **caractérisé en ce que** l'articulateur (2) est réalisé sous la forme d'un articulateur virtuel.

10. Programme informatique présentant des moyens de code programme adaptés pour mettre en oeuvre toutes les étapes du procédé selon la revendication 9, lorsque le programme est exécuté sur un ordinateur.

11. Articulateur, en particulier adapté pour mettre en oeuvre le procédé selon l'une des revendications 1 à 8,
comportant une portion de support (6) et une portion de basculement (7), la portion de support (6) et la portion de basculement (7) étant reliées l'une à l'autre avec faculté de basculement par un axe de basculement (8), la portion de basculement (7) comprenant un logement supérieur pour loger un modèle d'arcade dentaire (1) supérieur, et la portion de support comprenant un logement inférieur (6) pour loger un modèle d'arcade dentaire (24) inférieur,
comportant un dispositif de positionnement (4), le dispositif de positionnement (4) étant et/ou pouvant être agencé fixe par rapport à la portion de support (6), le dispositif de positionnement (4) présentant une surface de support (10) horizontale à titre de surface auxiliaire de support (10),
une ligne auxiliaire (13) de suture palatine et une ligne auxiliaire (12) de centre masticatoire étant définies par rapport au dispositif de positionnement, un plan d'occlusion de consigne (15) et une ligne de dent antérieure (14) pouvant être déduits,
dans lequel, dans une projection sur le plan de la surface auxiliaire de support (10), la ligne auxiliaire (12) de centre masticatoire s'étend dans une plage angulaire de +-5° parallèlement à l'axe de basculement projeté (8) et la ligne auxiliaire (13) de suture palatine s'étend dans une plage angulaire de +-5° perpendiculairement à l'axe de basculement projeté (8), et en vue de côté l'axe de basculement (8) est parallèle et décalé en hauteur par rapport à la surface auxiliaire de support (10),
dans lequel la ligne de dent antérieure (14) ou la ligne de dent antérieure projetée (14) est agencée parallèlement à l'axe de basculement (8) en étant écartée d'une longueur L par rapport à la ligne auxiliaire (12) de centre masticatoire, et le plan d'occlusion de consigne (15) est défini par l'axe de basculement (8) et par la ligne (14) de dent antérieure et occupe un angle d'occlusion de consigne compris entre 1° et 20° par rapport à la surface auxiliaire de support (10).

12. Articulateur (2) selon la revendication 11, **caractérisé en ce que** la ligne auxiliaire (12) de centre masticatoire et/ou la ligne auxiliaire (13) de suture palatine sont insérées en tant que lignes dans la surface de support (10).

13. Articulateur (2) selon la revendication 11, **caractérisé en ce que** la ligne auxiliaire (12) de centre masticatoire et/ou la ligne auxiliaire (13) de suture palatine sont projetées en tant que marquages au laser ou illustrées comme surveillance par caméra.

14. Articulateur (2) selon l'une des revendications 11 à 13, **caractérisé en ce qu'**une pluralité de lignes auxiliaires (12) de centre masticatoire et/ou de lignes auxiliaires (13) de suture palatine sont définies, qui sont assignées chacune à différents angles des plages angulaires.

15. Articulateur (2) selon l'une des revendications 11 à 14, **caractérisé en ce que** la surface de support (10) est réglable en hauteur pour régler différents angles d'occlusion de consigne.
